# EUROPÄISCHE PATENTANMELDUNG

(11) **EP 2 022 928 A1**
(43) Veröffentlichungstag der Anmeldung: **11.02.2009**
(21) Anmeldenummer: 07015078.4
(22) Anmeldetag: 01.08.2007
(51) Int. Cl.: E06B 9/327

(54) **Lamelle mit seitlichen Führungsnippeln**

(71) Anmelder: WAREMA Kunststofftechnik und Maschinenbau GmbH, 97828 Marktheidenfeld (DE)
(72) Erfinder: Kunkel, Christian, 97840 Hafenlohr-Windheim (DE); Scheiner, Karlheinz, 97857 Urspringen (DE)
(74) Vertreter: Erb, Henning

(57) **Zusammenfassung**

Eine Lamelle dient zum Aufbau von Lamellenbehängen von Sonnenschutzanlagen. Sie weist seitliche Führungsnippel (14) aus Kunststoff auf, die mit einem Lamellenkörper (12) formschlüssig verbunden sind, wobei den Führungsnippeln (14) zugeordnete Zapfen (30) durch Aussparungen in dem Lamellenkörper (12) ragen. Für einen einfachen und stabilen Halt weisen die Führungsnippel (14) jeweils zwei flächige Elemente (24, 26) auf, die auf der Oberseite bzw. der Unterseite des Lamellenkörpers (12) angeordnet sind, wobei die flächigen Elemente (24, 26) durch Preßzapfen (30) verbunden sind, die wenigstens einseitig in Öffnungen (36, 38) in einem oder beiden der flächigen Elemente (24, 26) eingepresst sind.

## Beschreibung

Die vorliegende Erfindung befasst sich mit einer Lamelle für Sonnenschutzanlagen mit Lamellenbehängen, die seitliche Führungsnippel aus Kunststoff aufweist, die mit dem Lamellenkörper formschlüssig verbunden sind, wobei den Führungsnippeln zugeordnete Zapfen durch Aussparungen in den Lamellenkörpern ragen.

Solche Lamellen sind bereits aus der DE 102 18 705 A1 bekannt. Dort werden die Führungsnippel mit Hilfe von Blindnieten in Kunststofftechnik festgelegt, die an den Führungsnippel angeformt sind. Der Vorteil ist, dass die Anbringung der Führungsnippel an der montierten Anlage erfolgen kann, nachteilig ist die schwierige Auslegung von Blindnieten in Kunststofftechnik und die Gefahr einer fehlerhaften Montage.

Bekannt ist es auch, die Kunststoffzapfen im Wege des Ultraschallschweißens hinter der Durchsteckstelle in dem Lamellenkörper abzuflachen, wobei hier die optische Qualität der Verschweißung unbefriedigend ist und ein nachträglicher Austausch von Führungsnippeln bei einer montierten Anlage nur mit großem Aufwand unter Einsatz von Metallblindnieten möglich ist, die optisch deutlich von den unteren Führungsnippeln abweichen.

Die Aufgabe der vorliegenden Erfindung besteht darin, eine Lamelle zu schaffen, deren Führungsnippel einfach montier- und austauschbar sind.

Erfindungsgemäß wird die Aufgabe durch eine Lamelle der eingangs genannten Art gelöst, bei welcher die Führungsnippel jeweils zwei flächige Elemente aufweisen, die auf der Oberseite bzw. der Unterseite des Lamellenkörpers angeordnet sind, wobei die flächigen Elemente durch Preßzapfen verbunden sind, die wenigstens einseitig in Öffnungen in einem der flächigen Elemente eingepresst sind.

Die erfindungsgemäße Lösung bietet den Vorteil, dass die beidseitig des Lamellenkörpers vorgesehenen flächigen Elemente neben einem guten Halt auch eine ansprechende optische Erscheinung bieten. Technisch besteht der Vorteil, dass sich durch die Verwendung der Preßzapfen, die in Bohrungen mit entsprechend gepasster Größe eingepresst werden, die erforderlichen Klemmkräfte mit vergleichsweise geringem technischen Aufwand bei der Herstellung der Führungsnippel mit den Preßzapfen und den Einpreßöffnungen herstellen lassen.

Für die Anordnung der Preßzapfen und den Vorgang des Verpressens sind verschiedene Ausführungen möglich.

Bei einer ersten Ausführungsform der Erfindung ist vorgesehen, dass die Zapfen jeweils mit einem der beiden flächigen Elemente einstückig ausgebildet sind und die Öffnungen an dem anderen flächigen Element als Bohrungen in Hohlzapfen ausgebildet sind, die durch die Aussparungen in dem Lamellenkörper ragen und an deren Rändern anliegen. Bei dieser Ausführungsform wird zunächst das flächige Element mit den Hohlzapfen in die Aussparungen in dem Lamellenkörper eingesetzt und anschließend wird das andere flächige Element mit seinen Preßzapfen in die Bohrungen in den Hohlzapfen eingedrückt und verankert. Bei dieser Ausführungsform ergibt sich durch die deckelartige Ausbildung des flächigen Elements mit den angebrachten Hohlzapfen eine besonders große optische Gestaltungsfreiheit.

In einer besonders bevorzugten Ausführungsform weisen die Ränder der Aussparungen jeweils wenigstens drei über den Umfang verteilte Laschen auf, die Anlagebereiche für die Hohlzapfen bilden und durch die eingeführten Hohlzapfen verformt sind. Durch die Elastizität der Laschen ist eine enge paßgenaue Montage des ersten flächigen Elements am Lamellenkörper ermöglicht, wobei vorzugsweise die Laschen im eingesteckten Zustand der Hohlzapfen derart verkantet sind, dass die Laschen die Hohlzapfen an einem Herausziehen aus der Aussparung hindern. Beispielsweise können die Aussparungen bei einer solchen Ausführungsform der Lamelle in dem Lamellenkörper kleeblattförmig mit vier Laschen sein.

In einer hierzu alternativen Ausführungsform der Erfindung ist vorgesehen, dass die Preßzapfen sowohl in Öffnungen in dem ersten flächigen Element als auch in Öffnungen in dem zweiten flächigen Element eingepresst sind und an den Rändern der Aussparungen spielfrei anliegen. Dies kann beispielsweise so realisiert sein, dass in einem Ausgangszustand die Preßzapfen in die Öffnungen eines Elementes eingesetzt werden, die als Durchgangsbohrungen ausgeführt sind, und nachfolgend durch die Aussparungen hindurch in die Öffnungen in dem zweiten flächigen Element eingepresst werden.

Um lose Preßzapfen zu vermeiden, die zunächst mühevoll in die Öffnungen eingesetzt werden müssen, ist in einer besonders bevorzugten Ausführungsform der Erfindung vorgesehen, dass die Preßzapfen jeweils an einem der flächigen Elemente in einer Ausgangsposition über eine Filmanbindung angebunden sind und über die Außenfläche des flächigen Elementes zugänglich sind, beispielsweise hervorstehen, wobei die Filmanbindung durch den Einpreßvorgang zerstörbar ist. Die Filmanbindung entsteht beim einstückigen Herstellen des betreffenden flächigen Elements mit den Preßzapfen, dient als Verliersicherung und behindert den Einpreßvorgang aufgrund ihrer Ausbildung als Sollbruchstelle nicht. Zudem sind bei dieser Ausführungsform die Preßzapfen bereits korrekt ausgerichtet. Selbstverständlich sind die Öffnungen in den beiden flächigen Elementen und die Aussparungen in dem Lamellenkörper so anzuordnen, dass eine fluchtende Bewegungsbahn für den Einpreßvorgang entsteht.

Vorzugsweise ist weiterhin vorgesehen, dass Randbereiche der Aussparungen wenigstens teilweise in einem Ausgangszustand vor dem Einpressen in den Einpreßweg des Preßzapfens ragen, wobei diese Bereiche elastisch nachgiebig gestaltet sind. Dies kann beispielsweise in der bereits zuvor bei der ersten Alternative beschriebenen Art und Weise der Fall sein, dass die Randbereiche der Aussparungen als nachgiebige Laschen ausgebildet sind. Die Elastizität ist aber auch dadurch erreichbar, dass der Lamellenkörper seitliche Schlitze aufweist, an deren Rändern die Aussparungen ausgebildet sind, wobei die flächigen Elemente durch einen Steg verbunden sind, dessen Form derart an die Form des Schlitzes angepasst ist, dass die Führungsnippel mit dem Steg im wesentlichen spielfrei in die Schlitze einsteckbar sind. Durch die Anpassung der Stege an die Schlitzform erreicht man nach dem Einstecken der Führungsnippel bereits einen stabilisierten Halt, so daß die Preßzapfen den Führungsnippel lediglich noch in der Auszugsrichtung an dem Lamellenkörper sichern müssen. Auf diese Weise wird die Beanspruchung der Preßzapfen auch im dauerhaften Betrieb der Anlage reduziert.

Zweckmäßig ist es bei dieser Ausführungsform, wenn die flächigen Elemente den Schlitzrand überlappen, um genügend Raum für die Anordnung der Preßzapfen zur Verfügung zu haben und die Stabilität der Führungsnippel zu verbessern.

Die zuvor angesprochene Elastizität wird bei dem Schlitz dadurch erreicht, dass dieser unter der Kraft der eingepressten Preßzapfen geringfügig aufweitbar ist, wobei die Aussparungen vorzugsweise in den Schlitzrand eingearbeitet sind und die Preßzapfen entsprechend mit einer Flanke gegen die Ränder der Aussparungen drücken. Durch eine symmetrische Anordnung der Preßzapfen lässt sich eine gleichmäßige Belastung erreichen.

Ergänzend zu den Preßzapfen kann es in einer weiteren bevorzugten Ausführungsform der Erfindung vorteilhaft sein, wenn die Führungsnippel Arretierungszapfen aufweisen, die bezüglich der Preßzapfen näher am Rand der Lamelle liegen und durch Bohrungen in dem Lamellenkörper ragen, die in kleinem Abstand zu den Schlitzrändern liegen. Die Arretierungszapfen stabilisieren den Lamellenkörper im Bereich des Schlitzes und verhindern ein übermäßiges Aufweiten des Schlitzes durch das Einpressen der Preßzapfen, wodurch sich ansonsten ein spielbehafteter Halt ergeben könnte.

Wie bereits erwähnt, kann die Preßwirkung allein dadurch erreicht werden, dass die Durchmesser der Preßzapfen gegenüber den Öffnungen ein entsprechendes Übermaß besitzen. Ergänzend oder alternativ ist es möglich, dass die Preßzapfen im Ausgangszustand seitlich hervorstehende Rippen aufweisen, die durch den Einpreßvorgang wenigstens teilweise abgeschabt werden. Auf diese Art und Weise ist das Übermaß der Preßzapfen im Bereich der Rippen erhöht oder, bei entsprechender Ausbildung der Rippen, auch überhaupt nur im Bereich der Rippen gegeben.

Bei einem seitlichen Schlitz im Lamellenkörper und einseitiger Anlage des Preßzapfens der Aussparungen werden die Rippen entsprechend einseitig stärker abgeschabt, wobei ein Übermaß für das weitere Einpressen in die zweite Öffnung erhalten bleibt.

Nachfolgend wird anhand der beigefügten Zeichnungen näher auf Ausführungsformen der Erfindung eingegangen. Es zeigen:
- Fig. 1: eine Draufsicht auf ein Lamellenende mit angesetztem Führungsnippel;
- Fig. 2: einen Längsschnitt der Lamelle nach Fig. 1;
- Fig. 3a: einen Querschnitt B-B der Lamelle aus Fig. 1 im lose aufgesetzten Ausgangszustand der Führungsnippel;
- Fig. 3b: einen Querschnitt entsprechend Fig. 3a mit eingepressten Preßzapfen;
- Fig. 4: eine Schrägansicht eines Führungsnippels nach Fig. 1 im Ausgangszustand;
- Fig. 5: eine Schrägansicht des Führungsnippels aus Fig. 4 von der gegenüberliegenden Seite;
- Fig. 6: eine teilgeschnittene Schrägansicht durch einen Preßzapfen;
- Fig. 7: einen Schnitt der Lamelle nach Fig. 1 in der Lamellenebene;
- Fig. 8: eine Seitenansicht der Lamelle nach Fig. 1 mit lose aufgesetztem Führungsnippel;
- Fig. 9: eine Schrägansicht des Stirnbereiches einer Lamelle ohne Führungsnippel;
- Fig. 10: eine Schrägansicht eines Stirnbereiches eines Lamellenkörpers einer weiteren Ausführungsform;
- Fig. 11: eine Schrägansicht einer weiteren Ausführungsform eines Führungsnippels für den Lamellenkörper aus Fig. 10;
- Fig. 12: eine geschnittene Schrägansicht durch die Preßzapfen des Führungsnippels nach Fig. 11;
- Fig. 13: eine geschnittene Ansicht durch Arretierungszapfen des Führungsnippels nach Fig. 11;
- Fig. 14: eine Draufsicht auf den Endbereich einer weiteren Ausführungsform einer Lamelle;
- Fig. 15: einen Längsschnitt der Lamelle nach Fig. 14;
- Fig. 16: eine Stirnansicht der Lamelle aus Fig. 14;
- Fig. 17: eine Draufsicht auf den Stirnbereich der Lamelle aus Fig. 14 ohne Führungsnippel, sowie
- Fig. 18: den Führungsnippel der Lamelle aus Fig. 14 im unmontierten Zustand.

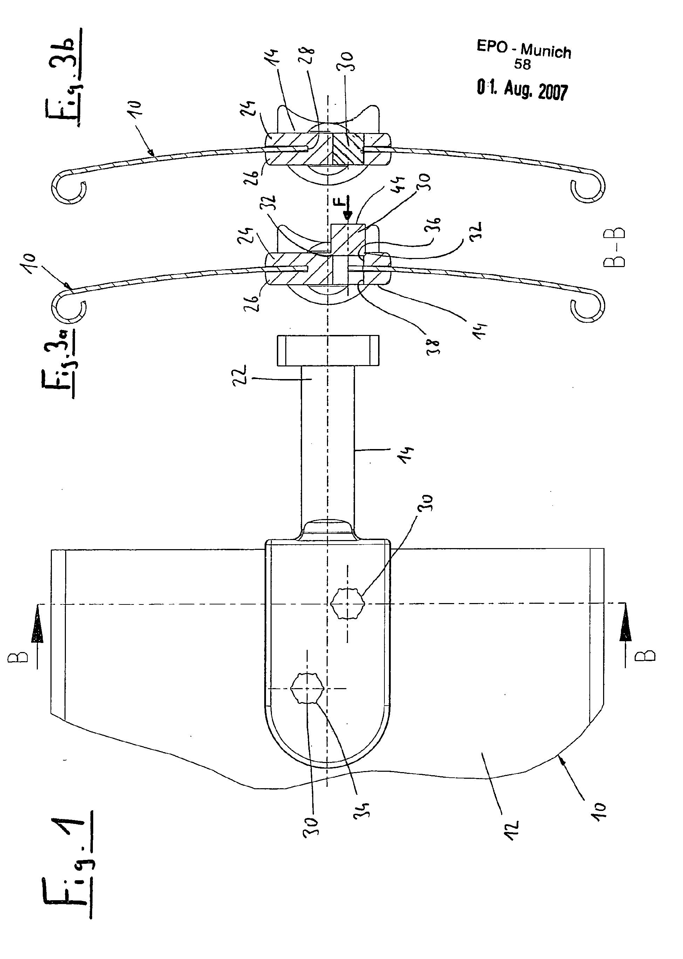

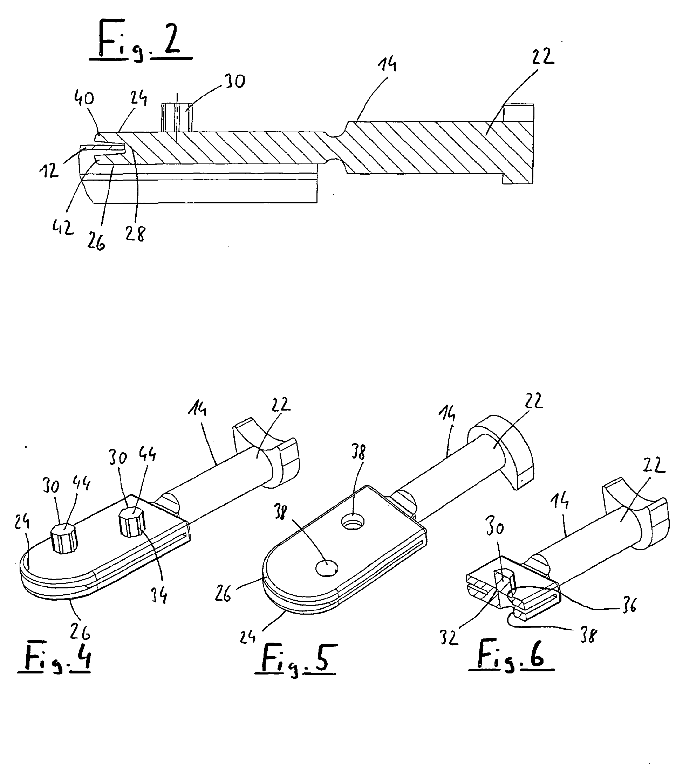

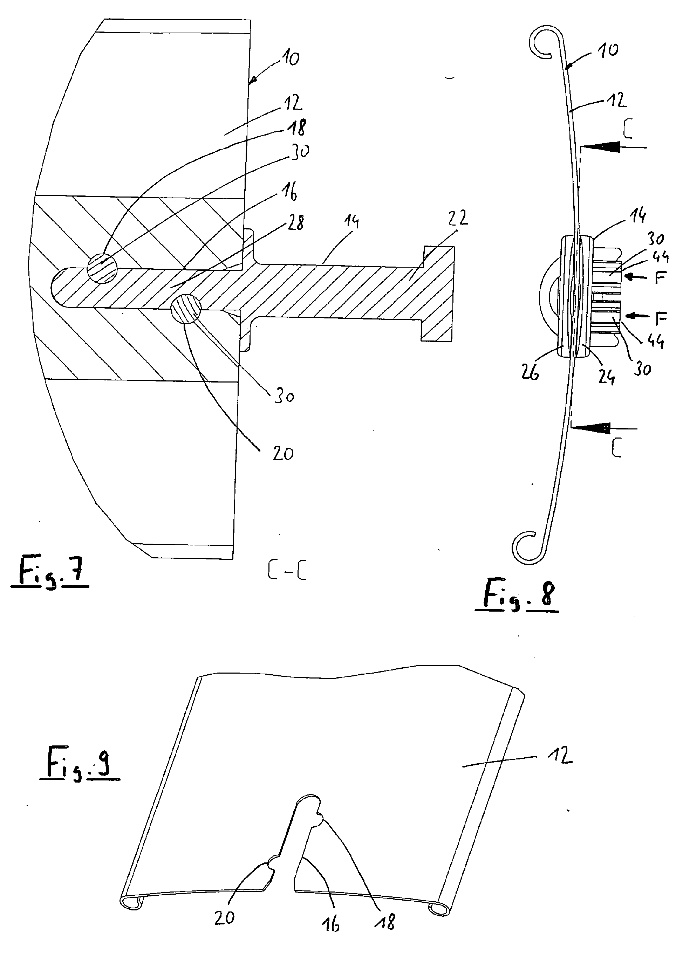

In Fig. 1 bis 9 wird in verschiedenen Ansichten auf eine erste Ausführungsform einer Lamelle 10 eingegangen, die aus einem Lamellenkörper 12, der in der Regel aus geeignetem Metallblech, z. B. Aluminium, und wenigstens einem stirnseitig angesetzten Führungsnippel 14 aus Kunststoff besteht, wobei nur ein Stirnbereich der Lamelle 10 gezeigt ist. Der Lamellenkörper 12 ist, wie aus Fig. 9 ersichtlich, an Stirnseiten, an dem ein Führungsnippel einzubringen ist, mit einem Schlitz 16 ausgebildet, an dessen Schlitzflanken jeweils eine Aussparung 18, 20 vorgesehen ist. In diesen Schlitz 16 ist der Führungsnippel 14, der in Fig. 4 bis 6 näher gezeigt ist, eingeschoben, wobei der Führungsnippel 14 aus einem Führungszapfen 22, der zur Führung in einer seitlichen, nicht gezeigten Führungsschiene dient, einem ersten flächigen Element 24, einem zweiten flächigen Element 26 sowie einem mittleren Steg 28 (s. Fig. 2) besteht. Er kann beispielsweise kostengünstig einstückig als Kunststoffspritzgußteil hergestellt werden. An das erste flächige Element 24 sind zwei Preßzapfen 30 angeformt, die im Ausgangszustand über eine Filmanbindung 32 (s. Fig. 6) unverlierbar an dem ersten flächigen Element 24 gehalten sind und über dessen Außenfläche hervorstehen, so daß sie leicht zugänglich sind. Die Preßzapfen 30 sind an ihren Außenflanken mit Rippen 34 ausgebildet, auf deren Funktion noch näher eingegangen wird.

Fluchtend unterhalb der Preßzapfen 30 sind in dem ersten flächigen Element 24 Öffnungen 36 sowie hierzu fluchtend Öffnungen 38 (s. auch Fig. 5) in dem zweiten flächigen Element 26 vorgesehen, wobei die Öffnungen 36, 38 im Bereich des mittleren durchgängigen Steges 28 unmittelbar ineinander übergehen.

Bei der Montage wird zunächst der Führungsnippel 14 mit seinem Steg 28 in den in seiner Form im wesentlichen entsprechenden Schlitz eingesteckt (s. Fig. 7), wobei umlaufende Überlappungen 40, 42 der flächigen Elemente 24, 26 (s. Fig. 2) den Führungsnippel 14 zusätzlich stabilisieren, so daß er nach dem Einsetzen zwar wieder aus dem Schlitz 16 herausziehbar ist, in allen übrigen Bewegungsrichtungen aber bereits stabilisiert ist. Ausgehend von diesem lose aufgesteckten Zustand, der auch in Fig. 3a dargestellt ist, wird anschließend eine Kraft F auf die hervorstehenden Stirnseiten 44 der Preßzapfen 30 ausgeübt, so daß zunächst die Filmanbindungen 32 aufgebrochen werden und anschließend die Preßzapfen zunächst durch die Öffnungen 36 in dem ersten flächigen Element 24 über die Aussparungen 18, 20 an den Schlitzrändern in die Öffnungen 38 in dem zweiten flächigen Element 26 eingepreßt werden. Die Abmessungen der Aussparungen 18, 20 sind so ausgelegt, dass die Preßzapfen Kräfte auf die Schlitzränder ausüben können, so daß der Schlitz geringfügig elastisch aufgeweitet und der Führungsnippel 14 entsprechend in dem Schlitz verklemmt wird. Während des Einpreßvorgangs werden die Rippen 34 an den Außenflanken der Preßzapfen abgeschabt. Das Ende des Einpreßvorganges ist erreicht, wenn die Stirnseiten 44 der Preßzapfen mit den Oberflächen der ersten flächigen Elemente 24 fluchten, wobei in diesem Zustand auch die gegenüberliegenden Flanken der Preßzapfen fluchtend mit der Oberfläche der flächigen Elemente 26 liegen, wie aus Fig. 3b ersichtlich ist, die den fertig montierten Zustand zeigt.

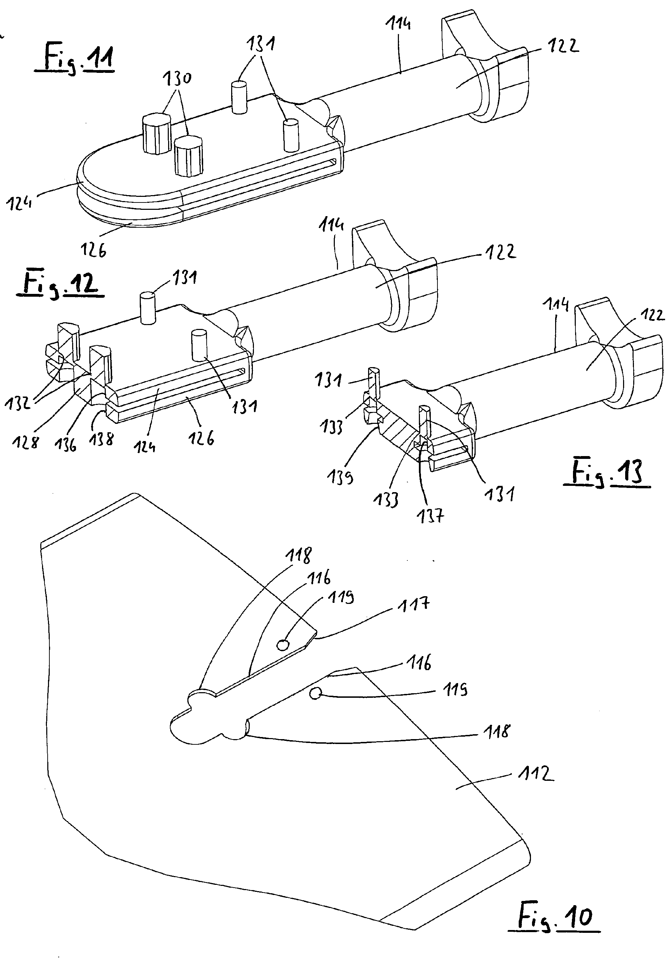

Eine weitere Ausführungsform einer Lamelle ist in Fig. 10 bis 13 gezeigt, wobei bei dieser Ausführungsform in einem Lamellenkörper 112 wiederum ein Schlitz 116 mit Einlaufschrägen 117 zum Erleichtern des Einsteckens des Führungsnippels ausgebildet ist. Bei dieser Ausführungsform legen sich aber die Aussparungen 118 an den Schlitzrändern unmittelbar gegenüber. Zusätzlich ist der Lamellenkörper mit zwischen den Aussparungen 118 und dem Lamellenrand liegenden Durchgangsbohrungen 119 versehen, auf deren Funktion später noch eingegangen wird.

Der in Fig. 11 gezeigte Führungsnippel 114 besitzt einen ähnlichen Grundaufbau mit einem Führungszapfen 122, einem ersten flächigen Element 124 und einem zweiten flächigen Element 126, die durch einen Steg 128 (s. Fig. 12) verbunden sind. Im Unterschied zu dem zuvor beschriebenen Führungsnippel 14 liegen jedoch die beiden Preßzapfen 130, die wiederum über Filmanbindungen 132 an dem ersten flächigen Element 124 angeformt sind, nicht versetzt, sondern unmittelbar nebeneinander, wodurch sich die Lage der Aussparungen 118 gemäß Fig. 10 erklärt. Darüber hinaus verfügt der Führungsnippel 114 über zwei Arretierungszapfen 131, die in ähnlicher Weise wie die Preßzapfen 130 über eine Filmanbindung 132 jeweils an dem ersten flächigen Element 124 festgelegt sind.

Nach dem Aufstecken des Führungsnippels 114 auf das Lamellenende werden zunächst die Arretierungszapfen 130 in erste Öffnungen 137 in dem ersten flächigen Element 124 eingepreßt und durchstoßen die Durchgangsbohrungen 119. Wie aus Fig. 13 gut zu erkennen ist, sind im Bereich des zweiten flächigen Elementes fluchtende Öffnungen 139 vorgesehen, die einen größeren Durchmesser aufweisen, so daß die Arretierungszapfen 131 nicht in diese Öffnungen 139 eingepreßt werden. Die Arretierungszapfen haben die Aufgabe, durch ihren Sitz in den Durchgangsbohrungen 119 des Lamellenkörpers 112 ein Aufweiten des Schlitzes zu verhindern, wenn die Preßzapfen 130 in die ersten Öffnungen 136 in dem ersten flächigen Element 124 und die zweiten Öffnungen 138 in dem zweiten flächigen Element 126 eingepreßt werden.

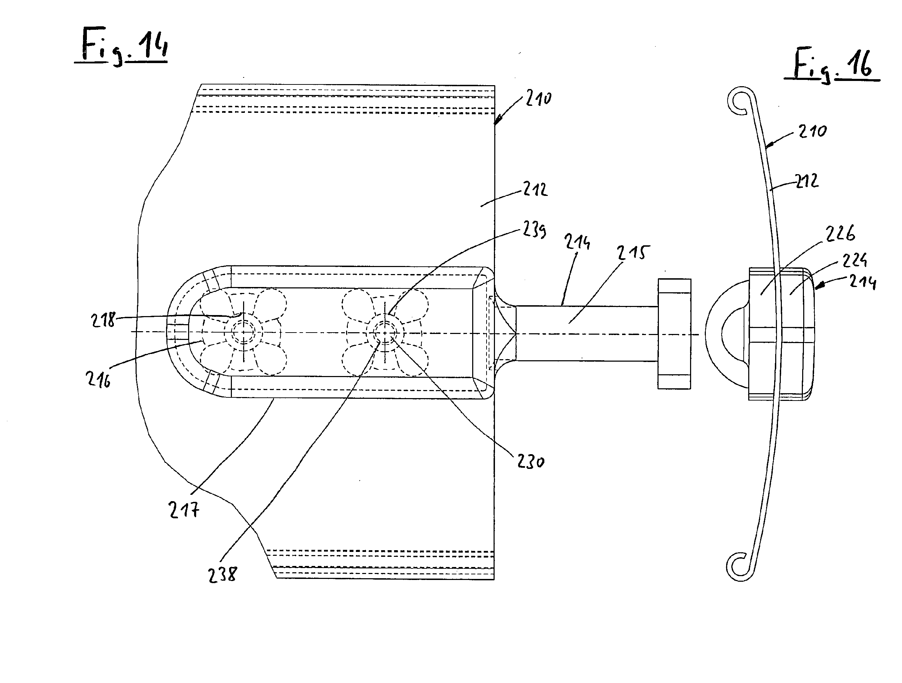

Eine weitere Ausführungsform einer Lamelle 210 ist in Fig. 14 bis 19 gezeigt, die wiederum aus einem Lamellenkörper 212 und Führungsnippeln 214 besteht. Im Unterschied zu den beiden zuvor beschriebenen Ausführungsformen sind im Bereich des stirnseitigen Lamellenendes des Lamellenkörpers 212 keine Schlitze, sondern zwei kleeblattähnliche Stanzungen 216 vorgesehen, die jeweils vier Blechlaschen 218 aufweisen, die elastisch nachgiebig sind.

Ein weiterer Unterschied der Lamelle gemäß Fig. 14 bis 19 besteht in der Ausbildung der Führungsnippel 214, die zweiteilig mit einem Führungskörper 215 und einem deckelartigen Verschlußelement 217 ausgebildet sind. Das deckelartige Verschlußelement 217 bildet das erste flächige Element 224, während an dem Führungskörper 215 das zweite flächige Element 226 ausgebildet ist. Die Führungszapfen 230 sind bei dieser Ausführungsform starr an dem ersten flächigen Element 224 angeformt.

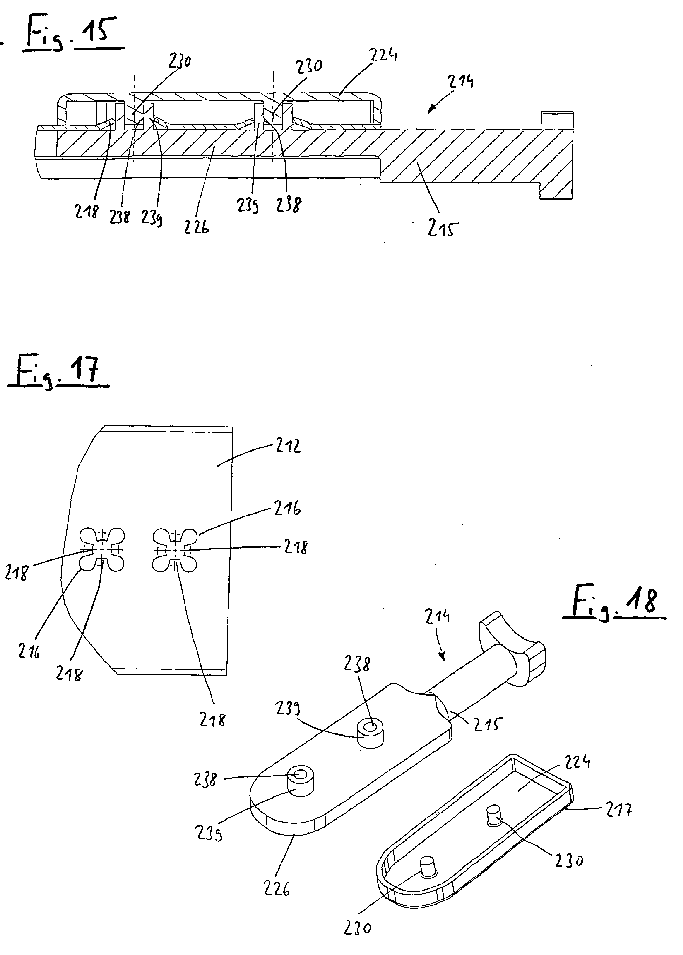

Entsprechend verfügt lediglich das zweite flächige Element 226 über Öffnungen 238 zum Einpressen der Preßzapfen 230, wobei diese Öffnungen 238 in Hohlzapfen 239 ausgebildet sind. Bei der Montage dieser Führungsnippel 214 werden zunächst die Hohlzapfen 239 in die kleeblattförmigen Stanzungen 216 eingedrückt, wobei die Seitenränder der Hohlzapfen 239 die Blechlaschen 218 leicht deformieren, wie aus Fig. 15 gut zu erkennen ist.

Die aufgestellten Blechlaschen 218 verkrallen sich mit ihren scharfkantigen Rändern in den Kunststoffaußenflanken der Hohlzapfen 239, so daß nach dem Eindrücken der Hohlzapfen 239 der Führungsnippel bereits in eindeutig definierter Lage unverlierbar am Lamellenkörper 212 festgelegt ist. Die dauerhafte Fixierung und auch optische Abdeckung der Stanzungen 216 erfolgt dadurch, dass das Verschlußelement 217 mit dem ersten flächigen Element 224 und den Führungszapfen 230 derart aufgesetzt wird, dass die Führungszapfen 230 in die Öffnungen 238 in den Hohlzapfen 239 eingepreßt werden.

## Patentansprüche

1. Lamelle für Sonnenschutzanlagen mit Lamellenbehängen, die seitliche Führungsnippel (14) aus Kunststoff aufweist, die mit einem Lamellenkörper (12) formschlüssig verbunden sind, wobei den Führungsnippeln (14) zugeordnete Zapfen (30) durch Aussparungen (18) in dem Lamellenkörper (12) ragen, **dadurch gekennzeichnet, daß** die Führungsnippel (14) jeweils zwei flächige Elemente (24, 26) aufweisen, die auf der Oberseite bzw. der Unterseite des Lamellenkörpers (12) angeordnet sind, wobei die flächigen Elemente (24, 26) durch Preßzapfen verbunden sind, die wenigstens einseitig in Öffnungen (36, 38) in einem oder beiden der flächigen Elemente (24, 26) eingepreßt sind.

2. Lamelle nach Anspruch 1, **dadurch gekennzeichnet, daß** die Zapfen (230) jeweils mit einem der beiden flächigen Elemente (224) einstückig ausgebildet sind und die Öffnungen (238) an dem anderen flächigen Element (226) als Bohrungen in Hohlzapfen (239) ausgebildet sind, die durch die Aussparungen (216) in dem Lamellenkörper (212) ragen und an deren Rändern (218) anliegen.

3. Lamelle nach Anspruch 2, **dadurch gekennzeichnet, daß** an den Rändern der Aussparungen (216) wenigstens drei über den Umfang verteilte Laschen (218) angeordnet sind, die Anlagebereiche für die Hohlzapfen (239) bilden und durch die eingesteckten Hohlzapfen (239) elastisch verformt sind.

4. Lamelle nach Anspruch 3, **dadurch gekennzeichnet, daß** die Laschen (218) derart ausgebildet sind, dass sie die Hohlzapfen (239) an einem Herausziehen aus den Aussparungen (216) hindern.

5. Lamelle nach Anspruch 3 oder 4, **dadurch gekennzeichnet, daß** die Aussparungen (216) in den Lamellenkörpern kleeblattförmig sind und vier Laschen (218) aufweisen.

6. Lamelle nach Anspruch 1, **dadurch gekennzeichnet, daß** die Preßzapfen (30) sowohl in Öffnungen (36) in dem ersten flächigen Element (24) als auch in Öffnungen (38) in dem zweiten flächigen Element (26) eingepresst sind und an den Rändern (18) der Aussparungen spielfrei anliegen.

7. Lamelle nach Anspruch 6, **dadurch gekennzeichnet, daß** die Preßzapfen (30) jeweils an einem der flächigen Elemente (24) in einer Ausgangsstellung über eine Filmanbindung (32) angebunden sind und über die Außenflächen des flächigen Elements (24) zugänglich sind, wobei die Filmanbindung (32) durch den Einpreßvorgang zerstörbar ist.

8. Lamelle nach Anspruch 6 oder 7, **dadurch gekennzeichnet, daß** Bereiche (18) der Aussparungen wenigstens teilweise in einem Ausgangszustand vor dem Einpressen in den Einpreßweg der Preßzapfen (30) ragen.

9. Lamelle nach einem der Ansprüche 6 bis 8, **dadurch gekennzeichnet, daß** der Lamellenkörper (12) seitliche Schlitze (16) aufweist, an deren Rändern die Aussparungen (18) ausgebildet sind, wobei die flächigen Elemente (24, 26) durch einen Steg (28) verbunden sind, dessen Form derart an die Form des Schlitzes (16) angepasst ist, dass die Führungsnippel (14) mit den Stegen (28) im wesentlichen spielfrei in die Schlitze (16) einsteckbar sind.

10. Lamelle nach Anspruch 9, **dadurch gekennzeichnet, daß** die flächigen Elemente (24, 26) umlaufende Überlappungen zum Überlappen des Schlitzrands aufweisen.

11. Lamelle nach Anspruch 9 oder 10, **dadurch gekennzeichnet, daß** die Aussparungen (18) in den Schlitzrand eingearbeitet sind und die Preßzapfen (30) entsprechend mit einer Flanke gegen die Ränder der Aussparungen (18) drücken.

12. Lamelle nach einem der Ansprüche 9 bis 11, **dadurch gekennzeichnet, dass** die Führungsnippel (114) Arretierungszapfen (131) aufweisen, die bezüglich der Preßzapfen (130) näher am Rand der Lamelle (110) liegen und durch Bohrungen (119) in dem Lamellenkörper ragen, die in kleinem Abstand zu den Schlitzrändern liegen.

13. Lamelle nach einem der vorhergehenden Ansprüche, **dadurch gekennzeichnet, daß** die Preßzapfen (30) im Ausgangszustand seitlich hervorstehende Rippen (34) aufweisen, die durch den Einpreßvorgang abgeschabt werden.
